# EUROPEAN PATENT APPLICATION

(11) **EP 4 617 385 A1**
(43) Date of publication of application: **17.09.2025**
(21) Application number: 23911245.1
(22) Date of filing: 14.08.2023
(51) Int. Cl.: C21C 5/52, C21C 7/00, F27B 3/08, F27B 3/28, F27D 11/08, F27D 21/00

(54) **DEVICE FOR DETERMINING ENERGIZED STATE OF ALTERNATING CURRENT ARC ELECTRIC FURNACE, OPERATION METHOD FOR ALTERNATING CURRENT ARC ELECTRIC FURNACE, AND ALTERNATING CURRENT ARC ELECTRIC FURNACE**

(30) Priority: 27.12.2022 JP 2022209280
(71) Applicant: JFE Steel Corporation, Tokyo 100-0011 (JP)
(72) Inventor: ODA, Nobuhiko, Tokyo 100-0011 (JP)
(74) Representative: Haseltine Lake Kempner LLP
(86) International application number: PCT/JP2023/029428
(87) International publication number: WO 2024/142461

(57) **Abstract**

Provided is a technology capable of promptly determining the energization condition in an alternating-current electric arc furnace, and stably determining the furnace condition without the influence of dust. Specifically, provided is an apparatus for determining the energized state of an alternating-current electric arc furnace, including a detection means for detecting sound generated within the alternating-current electric arc furnace, an output means for analyzing the frequency of the detected sound, and outputting a frequency -sound pressure signal, and a determination means for determining the covered state of an arc due to slag foaming based on a signal intensity in the range of Fi-0.5×F0 to Fi+0.5×F0, where Fi represents the frequency of an integral multiple of the fundamental frequency F0 of the alternating-current electric arc furnace. Also provided is a method for producing molten steel by melting and refining scrap with an alternating-current electric arc furnace by controlling one or more of a combination of the oxygen-containing gas supply rate, the carbon material supply amount, and the slag forming agent supply amount based on the energized state determined by the apparatus.

## Description

### Technical Field

The present invention relates to an apparatus for determining the energized state of an alternating-current electric arc furnace from sound generated within the furnace, an operation method for an alternating-current electric arc furnace using the apparatus, and an alternating-current electric arc furnace including the apparatus.

### Background Art

An electric arc furnace conducts heating and melting of a charging material in the furnace using an arc generated between an electrode and the charging material. The temperature of an arc is typically over 2000°C, resulting in a significant heat loss due to radiation. To mitigate this heat loss due to radiation, causing slag foaming is known to be effective for shielding the arc light. Therefore, detecting slag foaming in the furnace is crucial to increase energization efficiency. In addition, slag foaming has the effect of reducing the entrainment of the atmosphere in molten steel, which can also suppress the nitrogen absorption reaction of the molten steel. Accordingly, it is important to maintain the slag foaming state to produce high-grade molten steel.

In view of this background, various techniques for detecting a foaming state in an electric furnace have been studied. Patent Literature 1 discloses a method of detecting a foaming state in an energized electric furnace by monitoring the NOx concentration in an exhaust gas. In addition, Patent Literature 2 discloses a method of directly monitoring the slag level in a furnace using microwaves. Further, Patent Literature 3 discloses a method of indirectly estimating a foaming state by measuring the vibration or sound of a furnace body.

### Citation List

### Patent Literature

Patent Literature 1: JP-A-H10-226812
Patent Literature 2: JP-A-H07-166222
Patent Literature 3: JP-A-2013-170748

### Summary of Invention

### Technical Problem

However, the conventional techniques have the following problems.

The method described in Patent Literature 1 uses a component in the exhaust gas for the determination. Therefore it takes time to detect the exhaust gas component from the moment the energization condition in the furnace has changed, making it difficult to control slag foaming in real-time.

According to the method described in Patent Literature 2, when a large amount of dust is produced in a furnace, noise is superimposed on the signal, making it difficult to detect the foaming condition stably.

The method described in Patent Literature 3 allows relatively rapid detection of the foaming condition and is less susceptible to interference from dust and other factors within the furnace. However, when measuring frequencies of 500 Hz or lower, external sound from a plant other than the arc sound has a significant influence, making it difficult to determine the furnace condition stably.

Having been made in view of the circumstances, the present invention aims to provide an apparatus for determining an energized state of an alternating-current electric arc furnace, which can promptly determine the energization condition in the furnace and stably determine the furnace condition without the influence of dust, an operation method for an alternating-current electric arc furnace, and an alternating-current electric arc furnace.

### Solution to Problem

An apparatus for determining an energized state of an alternating-current electric arc furnace according to the present invention that advantageously solves the above problems includes: a detection means for detecting sound generated within the alternating-current electric arc furnace; an output means for analyzing a frequency of the detected sound and outputting a frequency-sound pressure signal; and a determination means for determining a covered state of an arc due to slag foaming based on signal intensity in a range of Fi-0.5×F0 to Fi+0.5×F0, where Fi represents a frequency of an integral multiple of a fundamental frequency F0 of the alternating-current electric arc furnace.

Note that the apparatus for determining an energized state of an alternating-current electric arc furnace according to the present invention may include the following features, for example, that are considered to be more preferable solution means.
(a) The determination means performs determination based on a signal intensity of a center frequency in a range of Fi-0.5×F0 to Fi+0.5×F0, where Fi represents a frequency of an integral multiple of the fundamental frequency F0.
(b) The determination means performs determination based on an intensity ratio between a signal intensity at a higher frequency and a signal intensity at a lower frequency within a range of Fi-0.5×F0 to Fi+0.5×F0, where Fi represents a frequency of an integral multiple of the fundamental frequency F0.
(c) A difference between the two frequencies used to determine the intensity ratio is 10 Hz or more but 40 Hz or less.

An operation method for an alternating-current electric arc furnace according to the present invention, which advantageously addresses the above problems, includes, when producing molten steel by melting and refining scrap in an alternating-current electric arc furnace, controlling one or more of a combination of an oxygen-containing gas supply rate, a carbon material supply amount, and a slag forming agent supply amount, based on the energized state determined by any of the apparatuses described above.

An alternating-current electric arc furnace according to the present invention that advantageously addresses the above problems includes any of the apparatuses described above.

### Advantageous Effects of Invention

An apparatus for determining the energized state of an alternating-current electric arc furnace, an operation method for an alternating-current electric arc furnace, and an alternating-current electric arc furnace according to the present invention can achieve prompt determination of the energization condition in the furnace and stable determination of the furnace condition without the influence of dust. This makes it possible to reduce the electric power unit consumption of the alternating-current electric arc furnace, which is industrially advantageous.

### Brief Description of Drawings

[Fig. 1] Fig. 1 is a graph showing the transition of the sound pressure ratio (75 Hz/50 Hz) measured by an apparatus for determining the energization of an alternating-current electric arc furnace according to an embodiment of the present invention, compared based on the difference in the slag foaming state.
[Fig. 2] Fig. 2 is a graph showing the relationship between the high-pitched sound detection time ratio determined with the apparatus of the above embodiment and the index of the electric power unit consumption.

### Description of Embodiments

Hereinafter, an embodiment of the present invention will be specifically described. The following embodiment only illustrates examples of a facility and a method for embodying the technical idea of the present invention. Thus, the configuration of the present invention is not limited thereto. That is, the technical idea of the present invention may be changed in various ways within the technical scope recited in the claims.

An apparatus for determining the energized state of an alternating-current electric arc furnace according to the present embodiment (hereinafter referred to as the "present apparatus") includes a sound-collecting microphone as a detection means for detecting sound generated within the alternating-current electric arc furnace. The present apparatus also includes an output means for analyzing the frequency of the detected sound and outputting a frequency-intensity signal. This function can be achieved by hardware, such as a computer, or software. The microphone may be placed anywhere within the range where sound is audible in the electric furnace. Thus, the microphone need not be placed near the electric furnace at a high temperature. In addition, the present apparatus also includes a means for determining the energized state. This function can also be achieved by hardware, such as a computer, or software.

First, sound with a frequency derived from alternating-current power is measured. It is possible to directly measure the intensity of the sound pressure at a predetermined frequency, or it is possible to measure the fluctuations in sound pressure and to perform a Fourier transform to compare the sound pressure at each frequency. It is also possible to compare the intensity ratios of sound pressure signals with two different frequencies within specified frequency ranges that interpose the fundamental frequency therebetween. Note that it is preferable to select the frequencies with an interval of 10 Hz or more as there is a case where the fundamental frequency may slightly fluctuate due to an electrical system on the supply side. Typically, sound with a frequency that is far from the fundamental frequency contains many disturbances, such as ambient sound. Therefore, provided that the frequency of an integral multiple of the fundamental frequency F0 is represented by Fi, it is preferable to use signal intensity in the range of Fi-0.5×F0 to Fi+0.5×F0. Besides, it is preferable to set the difference between the two frequencies to 40 Hz or less. Thus, the difference is preferably 10 Hz or more but 40 Hz or less.

Detailed description will be made hereinafter.

Before developing the present invention, the inventors confirmed that when the sound generated by an alternating-current arc is shielded by foaming slag, the pitch of the sound lowers. It is known that a liquid containing air bubbles significantly reduces the transmittance of high-frequency sound. As a result, when the acoustic frequency is measured outside a furnace during a slag foaming state, the center frequency shifts lower. This decrease, of the order of a few Hz, can be perceived by a person listening carefully but becomes imperceptible if the frequency changes continuously. Therefore, the inventors concluded that the slag foaming state could be stably detected through mechanical measurements.

The inventors conducted electric melting of scrap or the like using an alternating-current electric arc furnace with a tapping capacity of 150 t to assess its effects. The electric furnace used in the present embodiment includes a water-cooled oxygen lance and a carbon injection lance, through which oxygen and carbon material respectively can be blown into the furnace.

The operation pattern involves the following steps. First, an iron source and auxiliary material are charged into the furnace. The electric furnace used in the present embodiment is operated with about 80 t of molten steel left therein for the next charge, and the iron source and auxiliary material are charged into the molten steel. Examples of the iron source include scrap, pig iron, and reduced iron. Examples of the auxiliary material include a carburization material, an MgO source to protect refractories, and lime to adjust the composition of slag. After or while the raw material is charged into the furnace, the furnace starts to be energized, and oxygen and carbon are then blown into the furnace. After that, the iron source is sequentially supplied, and when the amount of molten steel in the furnace has reached approximately 230 t, the temperature of the molten steel is adjusted to approximately 1600°C, followed by tapping the molten steel. The target tapping weight is set to 150 t, and the operation continues to the next charge with approximately 80 t of molten steel left in the furnace.

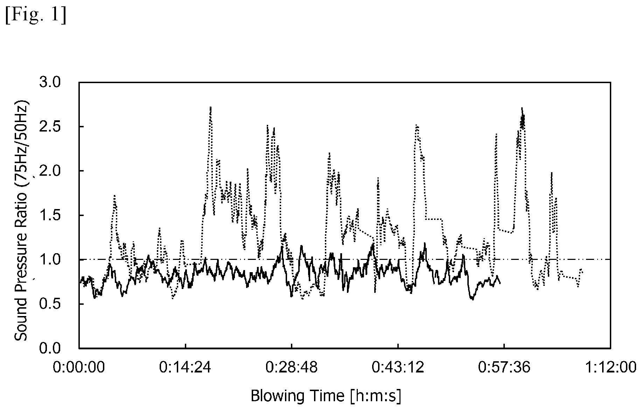

A sound-collecting microphone was disposed in the same building as the electric furnace. The microphone was positioned approximately 10 m away from the electric furnace. Acoustic data measured with the microphone were subjected to Fourier transform using an FTT analyzer and decomposed into sound pressure by frequency. The frequency width was set to 25 Hz, and a value obtained by dividing the sound pressure value at 75 Hz by that at 50 Hz was determined as the sound pressure ratio (75 Hz/50 Hz) and was then output to a monitor in a control room for the electric furnace. The sound pressure ratio (75 Hz/50 Hz) served as an index of the pitch of the energization sound. Fig. 1 shows the representative results of the measurement. A camera was inserted through the furnace wall to simultaneously observe the interior of the furnace until the viewing angle was blocked by dust or slag. The fundamental frequency of the electric furnace used in the present embodiment was 50 Hz. During operation, when foaming was maintained and no arc was visible (solid line in Fig. 1), the index of the energization sound pitch ranged from 0.4 to 1.0. However, when the furnace was energized in an unstable foaming state and arc light was detected with the camera (dotted line in Fig. 1), the index of the energization sound pitch fluctuated between 0.5 and 3.0.

### Example

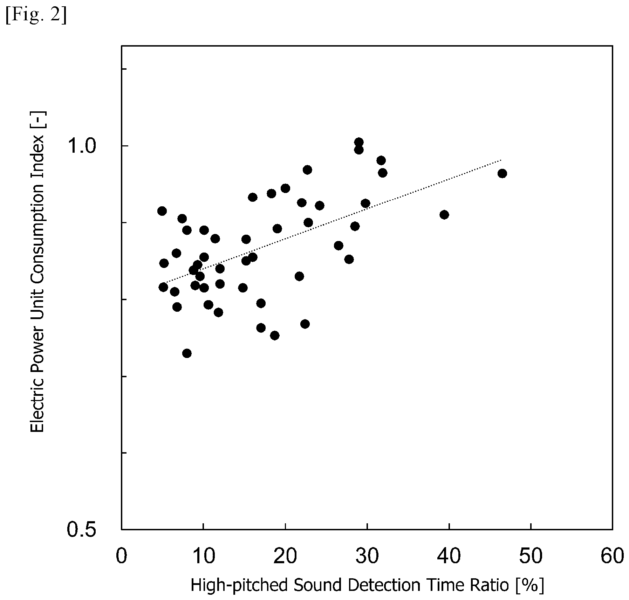

The same alternating-current electric arc furnace as in the above embodiment was used, and the oxygen supply rate, the carbon material blowing rate, and the slag forming agent supply rate were adjusted by trial and error while the index of the energization sound pitch was monitored so that the index of the energization sound pitch did not exceed 1.0. Lime was used as the slag forming agent. Fig. 2 shows the relationship between the index of the electric power unit consumption and the high-pitched sound detection time ratio, where the high-pitched sound detection time ratio indicates the ratio of the time during which the index of the energization sound pitch is over 1.0 to the energization time during operation. The electric power unit consumption is represented as an index, with the maximum value set to 1.0. Fig. 2 indicates that the lower high-pitched sound detection time ratio corresponds to the lower electric power unit consumption. When the index of the energization sound pitch (sound pressure ratio (75 Hz/50 Hz)) could achieve 1.0 or below in almost the entire period of time, the index of the electric power unit consumption was approximately 0.8. By operating the furnace while continuously monitoring the index of energization sound pitch in this manner, the energization efficiency was enhanced, and the electric power unit consumption was reduced. This improvement was attributed to the ability to maintain the slag foaming state during furnace operation, which effectively shielded radiation heat from the arc with the slag.

Note that, in this specification, "t" that is the unit of a mass represents 10³ kg.

### Industrial Applicability

Molten iron, which is produced with the alternating-current electric arc furnace and the operation method therefor according to the present invention, is less likely to absorb nitrogen. Therefore, the operation method is also advantageous as a method for obtaining high-purity molten iron. In addition, the alternating-current electric arc furnace and the operation method therefor according to the present invention can reduce the possibility of unexpected arc conduction to the furnace wall, which is formed of a refractory and a water-cooled panel, which can contribute to increasing the service life of the furnace body.

## Claims

1. An apparatus for determining an energized state of an alternating-current electric arc furnace, comprising:
a detection means for detecting sound generated within the alternating-current electric arc furnace;
an output means for analyzing a frequency of the detected sound and outputting a frequency-sound pressure signal; and
a determination means for determining a covered state of an arc due to slag foaming based on a signal intensity in a range of Fi-0.5×F0 to Fi+0.5×F0, where Fi represents a frequency of an integral multiple of a fundamental frequency F0 of the alternating-current electric arc furnace.

2. The apparatus for determining an energized state of an alternating-current electric arc furnace according to claim 1, wherein
the determination means performs determination based on a signal intensity of a center frequency in a range of Fi-0.5×F0 to Fi+0.5×F0, where Fi represents a frequency of an integral multiple of the fundamental frequency F0.

3. The apparatus for determining an energized state of an alternating-current electric arc furnace according to claim 1, wherein
the determination means performs determination based on an intensity ratio between a signal intensity at a higher frequency and a signal intensity at a lower frequency within a range of Fi-0.5 ×F0 to Fi+0.5×F0, where Fi represents a frequency of an integral multiple of the fundamental frequency F0.

4. The apparatus for determining an energized state of an alternating-current electric arc furnace according to claim 3, wherein
a difference between the two frequencies used to determine the intensity ratio is 10 Hz or more but 40 Hz or less.

5. An operation method for an alternating-current electric arc furnace, comprising, when producing molten steel by melting and refining scrap in an alternating-current electric arc furnace, controlling one or more of a combination of an oxygen-containing gas supply rate, a carbon material supply amount, and a slag forming agent supply amount, based on the energized state determined by the apparatus according to any one of claims 1 to 4.

6. An alternating-current electric arc furnace comprising the apparatus according to any one of claims 1 to 4.
